(19) Europäisches Patentamt
European Patent Office
Office européen des brevets

(11) Publication number: **0 102 193**
**B1**

(12) # EUROPEAN PATENT SPECIFICATION

(45) Date of publication of patent specification: **29.10.86**

(21) Application number: **83304324.3**

(22) Date of filing: **26.07.83**

(51) Int. Cl.⁴: **C 08 K 5/13,** C 08 K 5/36, C 08 L 23/02, C 07 C 69/732, C 07 C 69/612

(54) **Stabilizers for synthetic resins.**

(30) Priority: **26.07.82 JP 130634/82**
**27.12.82 JP 231293/82**

(43) Date of publication of application:
**07.03.84 Bulletin 84/10**

(45) Publication of the grant of the patent:
**29.10.86 Bulletin 86/44**

(84) Designated Contracting States:
**CH DE FR GB IT LI NL**

(56) References cited:
**US-A-3 644 482**
**US-A-3 758 549**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Ishii, Tamaki**
**1-12-2, Uchihonmachi**
**Suita Osaka-fu (JP)**
Inventor: **Yachigo, Shinichi**
**11-7-305 Sone Higashimachi 2-chome**
**Toyonaka Osaka-fu (JP)**
Inventor: **Takahashi, Yukoh**
**11-8-208, Sone Higashimachi 2-chome**
**Toyonaka Osaka-fu (JP)**

(74) Representative: **Geering, Keith Edwin et al**
**REDDIE & GROSE 16 Theobalds Road**
**London WC1X 8PL (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to stabilizers for synthetic resins.

Various synthetic resins including polyolefins such as polyethylene, polypropylene, etc., styrene synthetic resins such as polystyrene, impact resistant polystyrene, ABS, etc., engineering plastics such as polyacetals, polyamides etc., and polyurethanes, are widely used in various fields. However, it is well known that these synthetic resins have insufficient inherent stability, tending to deteriorate upon processing or use; the action of heat, light or oxygen can impair their mechanical properties markedly, leaving them soft or brittle or discolored or forming surface cracks.

To treat this problem, it is well known to use various phenolic, phosphite-type or sulfur-containing antioxidants. For example, it is known to use purely phenolic type antioxidants such as 2,6-di-t-butyl-4-methylphenol, 2,2'-methylenebis(4-methyl-6-t-butylphenol), 4,4'-butylindenebis(3-methyl-6-t-butylphenol), n-octadecyl 3-(3,5-di-t-butyl-4-hydroxyphenyl)propionate, 1,1,3-tris(2-methyl-4-hydroxy-5-t-butylphenyl)butane or tetrakis [3-(3,5-di-t-butyl-4-hydroxyphenyl)propionyloxymethyl]methane; or to use these phenolic antioxidants together with phosphite-type antioxidants such as tris(nonylphenyl)phosphite or distearylpentaerythritol diphosphite; or to use the above-mentioned phenolic antioxidants in combination with sulfur-containing antioxidants such as dilauryl thiodipropionate, dimyristyl thiodipropionate, distearyl thiodipropionate (USP 3644482) or alkyl esters derived from alkylthioalkanoic acids (USP 3758549).

However, these methods have not given fully satisfactory stability.

We have found that, by mixing synthetic resins with particular phenolic and particular sulfur-containing compounds, it is possible to obtain surprisingly good stability to heat and oxidation, not to be anticipated from the performance of prior antioxidant combinations.

The present invention provides a stabilizer for synthetic resins, of which the effective component is a mixture comprising (I) at least one phenolic compound represented by the general formula:

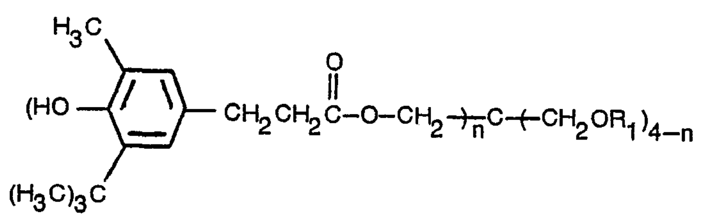

(I)

wherein $R_1$ is hydogen, an alkyl group having 1 to 4 carbon atoms or an acyl group having 1 to 5 carbon atoms, and n is an integer from 1 to 4, and (II) at least one sulfur-containing compound selected from compounds represented by the general formulae (II—1) and (II—2):

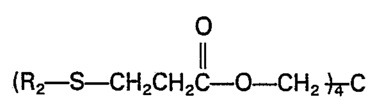

(II—1)

wherein $R_2$ is an alkyl group having 4 to 20 carbon atoms, and

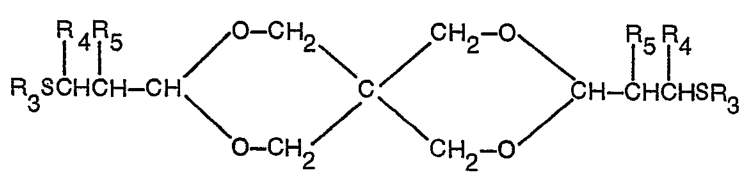

(II–2)

wherein $R_3$ is an alkyl group having 3 to 18 carbon atoms and $R_4$ and $R_5$ are selected indpendently from hydrogen and alkyl groups of 1 to 6 carbon atoms.

In the phenolic compound (I), for the stabilizing purposes of the invention, n is preferably 2—4, especially 3 or 4, and $R_1$ is preferably hydrogen or $C_{1-12}$ alkyl or acyl such as methyl, ethyl, acetyl.

Examples of such phenolic compounds (I) include tetrakis[3 - (3 - methyl - 5 - t - butyl - 4 - hydroxyphenyl)propionyloxymethyl]methane; 2,2,2 - tris[3-(3 - methyl - 5 - t - butyl - 4 - hydroxyphenyl)propionyloxymethyl]ethyl acetate; 2,2,2 - tris[3 - (3 - methyl - 5 - t - butyl - 4 - hydroxyphenyl)propionyloxymethyl] - 1 - methoxyethane.

Among the phenolic compounds (I), those wherein n is 1 to 3 are new compounds, and these can be

produced by reacting a 3 - (3 - methyl - 5 - t - butyl - 4 - hydroxyphenyl)propionic acid represented by the general formula (III):

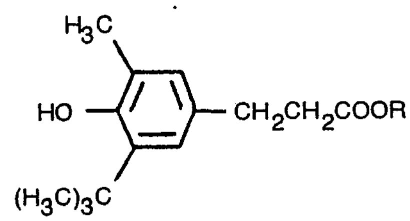

(III)

wherein R is hydrogen or an alkyl group having 1 to 4 carbons atoms with a pentaerythritol represented by the general formula (IV):

$$(HOCH_2)_{\overline{n}}C\text{—}(CH_2OR_1)_{4-n} \qquad \text{(IV)}$$

wherein n and $R_1$ are as mentioned above, preferbly in the molar ratio of 0.5—4 to 1. An acid or alkaline catalyst may be present.

Examples of such catalysts include proton acids such as p-toluenesulfonic acid, sulfuric acid, hydrochloric acid, methanesulfonic acid; Lewis acids such as aluminum chloride, zinc chloride, titanium tetrachloride, boron trifluoride; and basic catalysts such as potassium hydroxide sodium hydroxide, lithium hydroxide, lithium aluminum hydride, sodium boron hydride, sodium hydride, lithum hydride, sodium amide, sodium-t-butoxide, potassium-t-butoxide, sodium methoxide, potassium methoxide, sodium phenoxide, potassium phenoxide, metallic sodium, metallic potassium. Among others, the use of potassium-t-butoxide, sodium methoxide, sodium phenoxide or sodium hydroxide is preferable.

These catalysts can be used in an amount of 0.001 to 2 mol per mol of pentaerythritol (IV).

The reaction can be in an organic solvent such as toluene, xylene, dimethylformamide, dimethyl sulfoxide, though it will also proceed without solvent.

The reaction is suitably carried out at between 100° and 300°C., preferably between 130° and 200°C. Preferably, the reaction is completed at a reduced pressure of 60—0.1 mm Hg at the terminal stage.

In the compounds represented by the general formula (II—1), for obtaining good resin stability to heat and oxidation, the substituent $R_2$ is preferably an alkyl group having 6 to 18 carbon atoms, most preferably dodecyl.

Representative examples of such compounds are shown in Table 1.

TABLE 1

$$(R_2\text{—}S\text{—}CH_2CH_2\overset{\overset{\large O}{\|}}{C}\text{—}O\text{—}CH_2)_{\overline{4}}C$$

| Compound no. | $R_2$ |
|---|---|
| II—1—1 | $—C_6H_{13}$ |
| II—1—2 | $—C_{12}H_{25}$ |
| II—1—3 | $—C_{18}H_{37}$ |

In the compounds represented by the general formula (II—2), for like purposes $R_3$ is preferably alkyl of 12 to 18 carbon atoms, and $R_4$ and $R_5$ are preferably independently hydrogen or alkyl of 1 to 3 carbon atoms.

Representative examples of such compounds are shown in Table 2.

TABLE 2

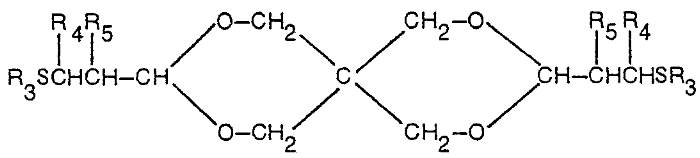

| Compound | $R_3$ | $R_4$ | $R_5$ |
|---|---|---|---|
| II—2—1 | $—C_8H_{17}$ | $—CH_3$ | —H |
| II—2—2 | $—C_{12}H_{25}$ | $—C_4H_9$ | —H |
| II—2—3 | $—C_{12}H_{25}$ | $—CH_3$ | —H |
| II—2—4 | $—C_{18}H_{37}$ | $—CH_3$ | —H |
| II—2—5 | $—C_{12}H_{25}$ | —H | —H |
| II—2—6 | $—C_{18}H_{37}$ | —H | $—CH_3$ |

In the synthetic resin stabilizer of the present invention the mixing ration (I): (II) by weight is e.g. 1: 0.15, preferably 1: 1—10, and more preferably 1: 2—6.

When the total compound (II) amounts to less than 0.5 times the weight of total compound (I), the desired effect may not be fully attained, when it exceeds 15 times, the effect obtained does not increase correspondingly and this may be unfavourable economically.

The amount of the stabilizer used is usually 0.01—5 weight parts and preferably 0.05—1 weight part for 100 weight parts of synthetic resin. The phenolic and sulfur-containing compounds may be mixed separately with the synthetic resin, rather than being mixed together first.

The stabilizers of the present invention may be used with other additives, for example, ultraviolet absorbers, light stabilizers, antioxidants, metal deactivators, metallic soaps, nucleating agents, lubricants, antistatic agents, flame retardants, pigments and fillers.

The resistance to light of a synthetic resin can be improved by using the stabilizer of the present invention together with ultraviolet absorbers, hindered amine type light-stabilizers, etc. for example, 2 - hydroxy - 4 - methoxybenzophenone, 2 - hydroxy - 4 - n - octoxybenzophenone, 2(2 - hydroxy - 5 - methylphenyl)benzotriazole, 2(2 - hydroxy - 3 - t - butyl - 5 - methylphenyl) - 5 - chlorobenzotriazole, 2(2 - hydroxy - 3,5 - di - t - butylphenyl) - 5 - chlorobenzotriazole, 2(2 - hydroxy - 3,5 - di - amylphenyl)benzotriazole, [2,2' - thiobis(4 - t - octylphenolate)] - butylamine nickel salt, 2,2,6,6 - tetramethyl - 4 - piperidinyl benzoate, bis(2,2,6,6 - tetramethyl - 4 - piperidinyl) - sebacate, bis(1,2,2,6,6 - pentamethyl - 4 - piperidyl) 2 - (3,5 - di - t - butyl - 4 - hydroxybenzyl) - 2 - n - butyl - malonate, 1 - {3 - (3,5 - di - t - butyl - 4 - hydroxyphenyl)propionyloxy}ethyl] - 4 - [3,5 - di - t - butyl - 4 - hydroxyphenyl)propionyloxy] - 2,2,6,6 - tetramethylpiperidine, and dimethyl succinate/1 - (2 - hydroxyethyl) - 4 - hydroxy - 2,2,6,6 - tetramethylpiperidine condensation product.

By using the stabilizers of the present invention together with other phosphite-type antioxidants, the color of synthetic resins can be improved. Such phosphite-type antioxidants include, for example, distearylpentaerythritol diphosphite, tris(2,4-di-t-butyl phenyl)phosphite, bis(2,4-di-t-butylphenyl)-pentaerthritol diphosphite, tetrakis(2,4-di-t-butylphenyl)-4,4'-biphenylene diphosphite.

The stabilizer of the present invention, can improve the stability of synthetic resin including e.g. low density polyethylene, high density polyethylene, linear low density polyethylene, chlorinated polyethylene, EVA resin, polypropylene, polyvinyl chloride, methacrylic resin, polystyrene, impact resistant polystyrene, ABS resin, AES resin, MBS resin, polyethylene terephthalate, polybutylene terephthalate, polyamide, polyimide, polycarbonate, polyacetal, polyurethane, unsaturated polyester resin.

The invention is illustrated by the following Preparations and Examples; the Examples include Runs which are according to the invention and Comparisons which are not.

Preparation 1

Production of tetrakis[3-(3-methyl-5-t-butyl-4-hydroxyphenyl)propionyloxymethyl]methane (Compound I—1)

30.04 g (0.12 mol) of methyl 3-(3-t-butyl-5-methyl-4-hydroxyphenyl)propionate and 2.72 g (0.02 mol) of pentaerythritol were mixed. To this mixture, 0.135 g (0.0025 mol) of sodium methoxide was added, and the reaction system was heated. After reaction at 140°C. for one hour, the pressure of the reaction system was

reduced, and at a pressure between 30 and 20 mm Hg and at a temperature between 140° and 150°C., the system was reacted for an additional period of 20 hours during which a total of 0.405 g (0.0075 mol) sodium methoxide was added in three equal periodic increments.

After the completion of the reaction, the internal temperature was cooled to 80°C., and after neutralization of the catalyst with hydrochloric acid, 200 g toluene was added to separate the solution. After washing the toluene phase with water, toluene was distilled away under reduced pressure. The thus-obtained crude product (30.07 g; yield 96%) was of 91% purity. This was purified by silica gel column chromatography to obtain 15.9 g of a glass-like product with a purity of 98%. Melting point: 45—55°C.

Elemental analysis for $C_{61}H_{84}O_{10}$

| | | |
|---|---|---|
| Calculated: | C 72.6% | H 8.4% |
| Found: | C 72.3%, | H 8.6% |

Mass analysis (FD-mass)
Molecular ion peak 1008

Proton-NMR
δ 1.39 (36 H s)
δ 2.18 (12 H s)
δ 2.71 (16 H m)
δ 3.93 (8 H s)
δ 4.7 (4H br. s)
δ 6.85 (4 H s)
δ 6.98 (4 H s)

## Preparation 2

Production of 2,2,2-tris[3-(3-methyl-5-t-butyl-4-hydroxyphenyl)Propionyloxymethyl]ethanol (Compound I—2)

12.52 g (0.050 mol) of methyl 3-(3-methyl-5-t-butyl-4-hydroxyphenyl)propionate and 2.72 g (0.020 mol) of pentaerythritol were mixed. To this mixture, 0.135 g (0.0025 mol) of sodium methoxide was added, and the reaction system was heated. After reaction at 140C. for one hour, the pressure of the reaction system was reduced, and at a pressure between 25 and 20 mm Hg and at a temperature between 140° and 150°., the system was reacted for an additional period of 30 hours during which a total of 0.405 g (0.0075 mol) sodium methoxide was added in three equal periodic increments.

After the completion of the reaction, the internal temperature was cooled to 80°C., and after neutralization of the catalyst with hydrochloric acid, 200 g toluene was added to separate the solution. After washing the toluene phase with water, toluene was distilled away under reduced pressure. The thus-obtained crude product (13.0 g; yield 99%) was of 78% purity. This was purified by silica gel chromatography to obtain a 6.7 g colorless glass-like product with a purity of 96%. Melting point: 40—50°C.

Elemental analysis for $C_{47}H_{66}O_{10}$

| | | |
|---|---|---|
| Found: | C 71.6% | H 8.1% |
| Calculated: | C 71.4%, | H 8.4% |

Mass analysis (FD-mass)
Molecular ion peak 790

Proton-NMR
δ 1.39 (27 H s)
δ 2.18 (9 H s)
δ 2.70 (12 H m)
δ 3.26 (2 H s)
δ 3.95 (6 H s)
δ 4.97 (4 H br. s)
δ 6.79 (3 H s)
δ 6.92 (3 H s)

## Preparation 3

Production of 2,2,2-tris[3-(3-methyl-5-t-butyl-4-hydroxyphenyl)propionyloxymethyl]ethyl acetate (Compound I—3)

By acetylating in the usual way the compound (I—2) obtained in Preparation 2, a reddish brown viscous product was obtained.

Elemental analysis for $C_{49}H_{68}O_{11}$

| | | |
|---|---|---|
| Found: | C 70.2% | H 7.8% |
| Calculated: | C 70.7%, | H 8.2% |

Mass analysis (FD-mass)
Molecular ion peak 832

Proton-NMR
δ 1.39 (27 H s)
δ 2.17 (3 H s)
δ 2.19 (9 H s)
δ 2.71 (12 H m)
δ 3.92 (8 H s)
δ 4.75 (3 H br. s)
δ 6.83 (3 H s)
δ 6.97 (3 H s)

Preparation 4

Production of 2,2,2-tris[3-(3-methyl-5-t-butyl-4-hydroxyphenyl)propionyloxymethyl]-1-methoxyethane (Compound I—4).

In place of pentaerythritol in Preparation 2, pentaerythritol monomethyl ether was used. By reacting under the same reaction conditions, a reddish brown viscous product was obtained.

Elemental analysis for $C_{48}H_{68}O_{10}$

| | | |
|---|---|---|
| Found: | C 71.2% | H 8.1% |
| Calculated: | C 71.6%, | H 8.5% |

Mass analysis (FD-mass)
Molecular ion peak 804
Proton-NMR
δ 1.39 (27 H s)
δ 2.18 (9 H s)
δ 2.70 (12 H m)
δ 3.15 (3 H s)
δ 3.27 (2 H s)
δ 3.94 (6 H s)
δ 4.95 (3 H br. s)
δ 6.18 (3 H s)
δ 6.93 (3 H s)

Example 1

The following components were mixed for 5 minutes with a mixer, and melt-kneaded with a mixing roll at 180°C. The compound thus obtained was formed by a heated press of 210°C. into a sheet of 1 mm thickness. A test piece of the dimensions 40 × 40 × 1 mm was produced. The time until 30% of the area of the test piece becomes brittle in a gear oven of 160°C. was measured. This time period was determined as the induction period to embrittlement, by which the stability to heat and oxidation was evaluated. The results are shown in Table 3.

Components:

| | |
|---|---|
| Non-stabilized polypropylene resin | 100 weight parts |
| Calcium stearate | 0.1 weight part |
| Test compound | variable |

In Table 3, the AO abbreviations represent the following compounds:

| | |
|---|---|
| AO—1 | n-octadecyl 3-(3,5-di-tert-butyl-4-hydroxyphenyl)propionate, |
| AO—2 | tetrakis[3-(3,5-di-t-butyl-4-hydroxyphenyl)propionyloxymethyl]methane, |
| AO—3 | 1,3,5-trimethyl-2,4,6-tris(3,5-di-t-butyl-4-hydroxybenzyl)benzene, |
| AO—4 | 1,1,3-tris(2-methyl-4-hydroxy-5-t-butylphenyl)butane, |
| AO—5 | dilauryl thiodipropionate, |
| AO—6 | distearyl thiodipropionate. |

In Table 3 and also in Tables 4 and 5, the indicated amount of each test compound is in weight parts per 100 weight parts of resin solid.

TABLE 3 (1)

| | Test Compound | Run 1 | 2 | 3 | 4 | 5 | 6 | 7 | 8 | 9 |
|---|---|---|---|---|---|---|---|---|---|---|
| Phenolic | I–1 | 0.05 | 0.05 | 0.05 | 0.05 | 0.05 | 0.05 | 0.05 | 0.05 | 0.05 |
| | I–2 | | | | | | | | | |
| | I–3 | | | | | | | | | |
| | I–4 | | | | | | | | | |
| | A0–1 | | | | | | | | | |
| | A0–2 | | | | | | | | | |
| | A0–3 | | | | | | | | | |
| | A0–4 | | | | | | | | | |
| Sulfur-containing | II–1–1 | 0.2 | | | | | | | | |
| | II–1–2 | | 0.1 | 0.2 | 0.3 | | | | | |
| | II–1–3 | | | | | 0.2 | | | | |
| | II–2–1 | | | | | | 0.2 | | | |
| | II–2–2 | | | | | | | 0.2 | | |
| | II–2–3 | | | | | | | | 0.2 | |
| | II–2–4 | | | | | | | | | 0.1 |
| | II–2–5 | | | | | | | | | |
| | II–2–6 | | | | | | | | | |
| | A0–5 | | | | | | | | | |
| | A0–6 | | | | | | | | | |
| Induction period to embrittlement (hours) | | 1290 | 1190 | 1600 | 1990 | 1420 | 1310 | 1440 | 1500 | 1170 |

TABLE 3 (2)

| Test Compound | | Run | | | | | | | | |
|---|---|---|---|---|---|---|---|---|---|---|
| | | 10 | 11 | 12 | 13 | 14 | 15 | 16 | 17 | 18 |
| Phenolic | I–1 | 0.05 | 0.05 | 0.05 | 0.05 | | | | | |
| | I–2 | | | | | 0.05 | 0.05 | 0.05 | 0.05 | 0.05 |
| | I–3 | | | | | | | | | |
| | I–4 | | | | | | | | | |
| | A0–1 | | | | | | | | | |
| | A0–2 | | | | | | | | | |
| | A0–3 | | | | | | | | | |
| | A0–4 | | | | | | | | | |
| Sulfur-containing | II–1–1 | | | | | 0.2 | | | | |
| | II–1–2 | | | | | | 0.1 | 0.2 | 0.3 | |
| | II–1–3 | | | | | | | | | 0.2 |
| | II–2–1 | | | | | | | | | |
| | II–2–2 | | | | | | | | | |
| | II–2–3 | | | | | | | | | |
| | II–2–4 | 0.2 | 0.3 | | | | | | | |
| | II–2–5 | | | 0.2 | | | | | | |
| | II–2–6 | | | | 0.2 | | | | | |
| | A0–5 | | | | | | | | | |
| | A0–6 | | | | | | | | | |
| Induction period to embrittlement (hours) | | 1580 | 1920 | 1500 | 1570 | 1260 | 1070 | 1570 | 1750 | 1390 |

TABLE 3 (3)

| Test Compound | | Run 19 | 20 | 21 | 22 | 23 | 24 | 25 | 26 | 27 |
|---|---|---|---|---|---|---|---|---|---|---|
| Phenolic | I–1 | 0.05 | 0.05 | 0.05 | 0.05 | 0.05 | 0.05 | 0.05 | 0.05 | |
| | I–2 | | | | | | | | | 0.05 |
| | I–3 | | | | | | | | | |
| | I–4 | | | | | | | | | |
| | A0–1 | | | | | | | | | |
| | A0–2 | | | | | | | | | |
| | A0–3 | | | | | | | | | |
| | A0–4 | | | | | | | | | |
| Sulfur-containing | II–1–1 | | | | | | | | | 0.2 |
| | II–1–2 | | | | | | | | | |
| | II–1–3 | | | | | | | | | |
| | II–2–1 | 0.2 | | | | | | | | |
| | II–2–2 | | 0.2 | | | | | | | |
| | II–2–3 | | | 0.2 | | | | | | |
| | II–2–4 | | | | 0.1 | 0.2 | 0.3 | | | |
| | II–2–5 | | | | | | | 0.2 | | |
| | II–2–6 | | | | | | | | 0.2 | |
| | A0–5 | | | | | | | | | |
| | A0–6 | | | | | | | | | |
| Induction period to embrittlement (hours) | | 1270 | 1400 | 1460 | 1050 | 1540 | 1710 | 1470 | 1480 | 1270 |

TABLE 3 (4)

| Test Compound | | Run | | | | | | | | |
|---|---|---|---|---|---|---|---|---|---|---|
| | | 28 | 29 | 30 | 31 | 32 | 33 | 34 | 35 | 36 |
| Phenolic | I–1 | | | | | | | | | |
| | I–2 | | | | | | | | | |
| | I–3 | 0.05 | 0.05 | 0.05 | 0.05 | 0.05 | 0.05 | 0.05 | 0.05 | |
| | I–4 | | | | | | | | | 0.05 |
| | A0–1 | | | | | | | | | |
| | A0–2 | | | | | | | | | |
| | A0–3 | | | | | | | | | |
| | A0–4 | | | | | | | | | |
| Sulfur-containing | II–1–1 | | | | | | | | | |
| | II–1–2 | 0.2 | | | | | | | | 0.2 |
| | II–1–3 | | 0.2 | | | | | | | |
| | II–2–1 | | | 0.2 | | | | | | |
| | II–2–2 | | | | 0.2 | | | | | |
| | II–2–3 | | | | | 0.2 | | | | |
| | II–2–4 | | | | | | 0.2 | | | |
| | II–2–5 | | | | | | | 0.2 | | |
| | II–2–6 | | | | | | | | 0.2 | |
| | A0–5 | | | | | | | | | |
| | A0–6 | | | | | | | | | |
| Induction period to embrittlement (hours) | | 1590 | 1400 | 1300 | 1420 | 1490 | 1560 | 1480 | 1490 | 1600 |

TABLE 3 (5)

| | Test Compound | Example 37 | Example 38 | Comparison 39 | Comparison 40 | Comparison 41 | Comparison 42 | Comparison 43 | Comparison 44 | Comparison 45 |
|---|---|---|---|---|---|---|---|---|---|---|
| Phenolic | I–1 | | | 0.05 | | | | | | |
| | I–2 | | | | 0.05 | | | | | |
| | I–3 | | | | | 0.05 | | | | |
| | I–4 | 0.05 | 0.05 | | | | 0.05 | | | |
| | A0–1 | | | | | | | 0.05 | | |
| | A0–2 | | | | | | | | 0.05 | |
| | A0–3 | | | | | | | | | 0.05 |
| | A0–4 | | | | | | | | | |
| Sulfur-containing | II–1–1 | | | | | | | | | |
| | II–1–2 | | | | | | | | | |
| | II–1–3 | | | | | | | | | |
| | II–2–1 | | | | | | | | | |
| | II–2–2 | | | | | | | | | |
| | II–2–3 | | | | | | | | | |
| | II–2–4 | 0.2 | | | | | | | | |
| | II–2–5 | | 0.2 | | | | | | | |
| | II–2–6 | | | | | | | | | |
| | A0–5 | | | | | | | | | |
| | A0–6 | | | | | | | | | |
| Induction period to embrittlement (hours) | | 1570 | 1490 | 150 | 120 | 130 | 130 | 30 | 50 | 40 |

TABLE 3 (6)

| | Test Compound | Comparison | | | | | | | | |
|---|---|---|---|---|---|---|---|---|---|---|
| | | 46 | 47 | 48 | 49 | 50 | 51 | 52 | 53 | 54 |
| Phenolic | I–1 | | | | | | | | | |
| | I–2 | | | | | | | | | |
| | I–3 | | | | | | | | | |
| | I–4 | | | | | | | | | |
| | A0–1 | | | | | | | | | |
| | A0–2 | | | | | | | | | |
| | A0–3 | | | | | | | | | |
| | A0–4 | 0.05 | | | | | | | | |
| Sulfur-containing | II–1–1 | | 0.2 | | | | | | | |
| | II–1–2 | | | 0.2 | | | | | | |
| | II–1–3 | | | | 0.2 | | | | | |
| | II–2–1 | | | | | 0.2 | | | | |
| | II–2–2 | | | | | | 0.2 | | | |
| | II–2–3 | | | | | | | 0.2 | | |
| | II–2–4 | | | | | | | | 0.2 | |
| | II–2–5 | | | | | | | | | 0.2 |
| | II–2–6 | | | | | | | | | |
| | A0–5 | | | | | | | | | |
| | A0–6 | | | | | | | | | |
| Induction period to embrittlement (hours) | | 25 | 30 | 30 | 20 | 20 | 20 | 20 | 20 | 20 |

TABLE 3 (7)

| Test Compound | | Comparison 55 | 56 | 57 | 58 | 59 | 60 | 61 | 62 | 63 |
|---|---|---|---|---|---|---|---|---|---|---|
| Phenolic | I–1 | | | | 0.05 | 0.05 | | | | |
| | I–2 | | | | | | 0.05 | 0.05 | | |
| | I–3 | | | | | | | | 0.05 | 0.05 |
| | I–4 | | | | | | | | | |
| | A0–1 | | | | | | | | | |
| | A0–2 | | | | | | | | | |
| | A0–3 | | | | | | | | | |
| | A0–4 | | | | | | | | | |
| Sulfur-containing | II–1–1 | | | | | | | | | |
| | II–1–2 | | | | | | | | | |
| | II–1–3 | | | | | | | | | |
| | II–2–1 | | | | | | | | | |
| | II–2–2 | | | | | | | | | |
| | II–2–3 | | | | | | | | | |
| | II–2–4 | | | | | | | | | |
| | II–2–5 | | | | | | | | | |
| | II–2–6 | 0.2 | | | | | | | | |
| | A0–5 | | 0.2 | | 0.2 | | 0.2 | | 0.2 | |
| | A0–6 | | | 0.2 | | 0.2 | | 0.2 | | 0.2 |
| Induction period to embrittlement (hours) | | 20 | 15 | 15 | 460 | 620 | 430 | 580 | 440 | 600 |

TABLE 3 (8)

| | Test Compound | Comparison 64 | 65 | 66 | 67 | 68 | 69 | 70 | 71 | 72 |
|---|---|---|---|---|---|---|---|---|---|---|
| Phenolic | I–1 | | | | | | | | | |
| | I–2 | | | | | | | | | |
| | I–3 | | | | | | | | | |
| | I–4 | 0.05 | 0.05 | | | | | | | |
| | A0–1 | | | 0.05 | 0.05 | 0.05 | | | | |
| | A0–2 | | | | | | 0.05 | 0.05 | 0.05 | 0.05 |
| | A0–3 | | | | | | | | | |
| | A0–4 | | | | | | | | | |
| Sulfur-containing | II–1–1 | | | | | | | | | |
| | II–1–2 | | | 0.2 | | | 0.2 | 0.3 | | |
| | II–1–3 | | | | | | | | | |
| | II–2–1 | | | | | | | | | |
| | II–2–2 | | | | | | | | 0.2 | |
| | II–2–3 | | | | | | | | | |
| | II–2–4 | | | | 0.2 | | | | | 0.2 |
| | II–2–5 | | | | | | | | | |
| | II–2–6 | | | | | | | | | |
| | A0–5 | 0.2 | | | | | | | | |
| | A0–6 | | 0.2 | | | 0.2 | | | | |
| Induction period to embrittlement (hours) | | 440 | 610 | 310 | 320 | 330 | 400 | 480 | 390 | 440 |

TABLE 3 (9)

| Test Compound | | Comparison | | | | | | | | |
|---|---|---|---|---|---|---|---|---|---|---|
| | | 73 | 74 | 75 | 76 | 77 | 78 | 79 | 80 | 81 |
| Phenolic | I–1 | | | | | | | | | |
| | I–2 | | | | | | | | | |
| | I–3 | | | | | | | | | |
| | I–4 | | | | | | | | | |
| | A0–1 | | | | | | | | | |
| | A0–2 | 0.05 | 0.05 | 0.05 | 0.05 | 0.05 | | | | |
| | A0–3 | | | | | | 0.05 | 0.05 | 0.05 | 0.05 |
| | A0–4 | | | | | | | | | |
| Sulfur-containing | II–1–1 | | | | | | | | | |
| | II–1–2 | | | | | | 0.2 | | | |
| | II–1–3 | | | | | | | | | |
| | II–2–1 | | | | | | | | | |
| | II–2–2 | | | | | | | | | |
| | II–2–3 | | | | | | | | | |
| | II–2–4 | 0.3 | | | | | | 0.2 | | |
| | II–2–5 | | | | | | | | | |
| | II–2–6 | | | | | | | | | |
| | A0–5 | | 0.2 | 0.3 | | | | | 0.2 | |
| | A0–6 | | | | 0.2 | 0.3 | | | | 0.2 |
| Induction period to embrittlement (hours) | | 530 | 450 | 500 | 750 | 820 | 490 | 460 | 380 | 670 |

TABLE 3 (10)

| Test Compound | | Comparison 82 | 83 | 84 | 85 | | | | | |
|---|---|---|---|---|---|---|---|---|---|---|
| Phenolic | I–1 | | | | | | | | | |
| | I–2 | | | | | | | | | |
| | I–3 | | | | | | | | | |
| | I–4 | | | | | | | | | |
| | A0–1 | | | | | | | | | |
| | A0–2 | | | | | | | | | |
| | A0–3 | | | | | | | | | |
| | A0–4 | 0.05 | 0.05 | 0.05 | | | | | | |
| Sulfur-containing | II–1–1 | | | | | | | | | |
| | II–1–2 | 0.2 | | | NON ADDITION | | | | | |
| | II–1–3 | | | | | | | | | |
| | II–2–1 | | | | | | | | | |
| | II–2–2 | | | | | | | | | |
| | II–2–3 | | | | | | | | | |
| | II–2–4 | | 0.2 | | | | | | | |
| | II–2–5 | | | | | | | | | |
| | II–2–6 | | | | | | | | | |
| | A0–5 | | | | | | | | | |
| | A0–6 | | | 0.2 | | | | | | |
| Induction period to embrittlement (hours) | | 510 | 430 | 390 | 5 | | | | | |

Example 2

To a graft ABS latex, suspension, produced by bead-peptization with an anionic surface-active agent, of the test compounds shown in Table 4 were added in amount shown in Table 4. In the usual way, the mixture was salted out with an aqueous magnesium sulfate solution, and the resulting precipitate was filtered, washed with water and dried. The stability to heat and oxidation was evaluated by the following methods, using the ABS resin powder thus obtained as the test material. The results are shown in Table 4.

1. After heat-ageing in a gear oven at 180°C., the degree of discoloration of the ABS resin was observed,

2. The oxygen absorption induction period (I.P.) was measured in an oxygen atmosphere at 170°C., using an oxygen absorption induction period measuring apparatus,

3. The ABS resin powder was extruded repeatedly using a small extruder (scew D = 20 mm ϕ. L/D = 25, stand die D = 3 mm ϕ, L/D = 10) under the following conditions. The degree of the discoloration of the ABS pellets of the fourth extrusion was evaluated by the color difference ΔYI from the non-addition ABS pellets of the first extrusion.

Extrusion condition:

| | | | | |
|---|---|---|---|---|
| Rotation: | 40 rpm | | | |
| Temperature: | $C_1$ | $C_2$ | $C_3$ | D |
| | 220° | 240° | 260° | 280°C. |

4. The ABS pellets after the fourth extrusion obtained in the above-mentioned method of paragraph 3 were compression-molded at 180°C. for 10 minutes to prepare a No. 1 Test Piece specified in JIS K 7111. By using a Charpy impact testing machine, the Charpy impact value of the Test Piece was measured, following JIS K 7111.

In Table 4, AO—7 is the compound 2,6-di-t-butyl-4-methylphenol and AO—2 and AO—5 are as in Table 3.

TABLE 4 (1)

| | | Run | | | | | | |
|---|---|---|---|---|---|---|---|---|
| | | [illegible] | 2 | 3 | 4 | 5 | 6 | 7 |
| Phenolic | I–1 | 0.5 | 0.5 | 0.5 | 0.5 | 0.5 | 0.5 | |
| | I–2 | | | | | | | 0.5 |
| | I–3 | | | | | | | |
| | I–4 | | | | | | | |
| | A0–2 | | | | | | | |
| | A0–7 | | | | | | | |
| Sulfur-containing | II–1–2 | 0.5 | 1.0 | | | | | 0.5 |
| | II–2–4 | | | 0.5 | 1.0 | | | |
| | II–2–5 | | | | | 0.5 | 1.0 | |
| | A0–5 | | | | | | | |
| Discoloration after 30 min. | | light yellow | light yellow | light yellow | light yellow | light yellow | light yellow | light yellow |
| after 60 min. | | yellow brown | yellow brown | yellow brown | yellow brown | yellow brown | yellow brown | yellow brown |
| Oxygen absorption induction period (min.) | | 210 | 270 | 205 | 260 | 210 | 265 | 190 |
| Δ YI | | 10.9 | 10.3 | 11.0 | 10.7 | 10.9 | 10.5 | 10.9 |
| Charpy impact value (Kg f. cm /cm) | | 21.2 | 21.7 | 20.3 | 20.9 | 20.7 | 21.2 | 19.5 |

TABLE 4 (2)

| | Test Compound | Run 8 | 9 | 10 | 11 | 12 | | |
|---|---|---|---|---|---|---|---|---|
| Phenolic | I–1 | | | | | | | |
| | I–2 | 0.5 | 0.5 | 0.5 | 0.5 | 0.5 | | |
| | I–3 | | | | | | | |
| | I–4 | | | | | | | |
| | A0–2 | | | | | | | |
| | A0–7 | | | | | | | |
| Sulfur-containing | II–1–2 | 1.0 | | | | | | |
| | II–2–4 | | 0.5 | 1.0 | | | | |
| | II–2–5 | | | | 0.5 | 1.0 | | |
| | A0–5 | | | | | | | |
| Discoloration | after 30 min. | light yellow | light yellow | light yellow | light yellow | light yellow | | |
| | after 60 min. | yellow brown | yellow brown | yellow brown | yellow brown | yellow brown | | |
| Oxygen absorption induction period (min.) | | 255 | 185 | 240 | 190 | 250 | | |
| Δ YI | | 10.6 | 11.0 | 10.8 | 11.2 | 10.6 | | |
| Charpy impact value (Kg f. cm /cm) | | 20.0 | 19.0 | 19.4 | 19.3 | 19.7 | | |

TABLE 4 (3)

| Test Compound | | Run | | | | | | |
|---|---|---|---|---|---|---|---|---|
| | | | | 13 | 14 | 15 | 16 | 17 |
| Phenolic | I–1 | | | | | | | |
| | I–2 | | | | | | | |
| | I–3 | | | 0.5 | 0.5 | 0.5 | | |
| | I–4 | | | | | | 0.5 | 0.5 |
| | A0–2 | | | | | | | |
| | A0–7 | | | | | | | |
| Sulfur-containing | II–1–2 | | | 0.5 | | | 0.5 | |
| | II–2–4 | | | | 0.5 | | | 0.5 |
| | II–2–5 | | | | | 0.5 | | |
| | A0–5 | | | | | | | |
| Discoloration after 30 min. | | | | light yellow | light yellow | light yellow | light yellow | light yellow |
| after 60 min. | | | | yellow brown | yellow brown | yellow brown | yellow brown | yellow brown |
| Oxygen absorption induction period (min.) | | | | 200 | 195 | 200 | 205 | 200 |
| Δ YI | | | | 10.7 | 10.8 | 11.0 | 10.6 | 10.7 |
| Charpy impact value (Kg f. cm /cm) | | | | 20.7 | 20.2 | 20.4 | 20.8 | 20.4 |

TABLE 4 (4)

| Test Compound | | Run | Comparison | | | | | |
|---|---|---|---|---|---|---|---|---|
| | | 18 | 19 | 20 | 21 | 22 | 23 | 24 |
| Phenolic | I–1 | | 0.5 | 1.0 | 0.5 | 0.5 | | |
| | I–2 | | | | | | 0.5 | 0.5 |
| | I–3 | | | | | | | |
| | I–4 | 0.5 | | | | | | |
| | A0–2 | | | | | | | |
| | A0–7 | | | | | | | |
| Sulfur-containing | II–1–2 | | | | | | | |
| | II–2–4 | | | | | | | |
| | II–2–5 | 0.5 | | | | | | |
| | A0–5 | | | | 0.5 | 1.0 | | 0.5 |
| Discoloration after 30 min. | | light yellow | deep brown | yellow brown | yellow brown | yellow brown | deep brown | yellow brown |
| after 60 min. | | yellow brown | black brown | deep brown | brown | brown | black brown | brown |
| Oxygen absorption induction period (min.) | | 205 | 140 | 165 | 145 | 170 | 130 | 135 |
| Δ YI | | 10.9 | 14.2 | 14.0 | 14.6 | 14.7 | 14.2 | 14.1 |
| Charpy impact value (Kg f. cm /cm) | | 20.5 | 11.9 | 13.0 | 12.1 | 13.2 | 11.3 | 11.6 |

TABLE 4 (5)

| Test Compound | | Comparison 25 | 26 | 27 | 28 | 29 | 30 | 31 |
|---|---|---|---|---|---|---|---|---|
| Phenolic | I–1 | | | | | | | |
| | I–2 | | | | | | | |
| | I–3 | 0.5 | 0.5 | | | | | |
| | I–4 | | | 0.5 | 0.5 | | | |
| | A0–2 | | | | | 0.5 | 1.0 | 0.5 |
| | A0–7 | | | | | | | |
| Sulfur-containing | II–1–2 | | | | | | | 0.5 |
| | II–2–4 | | | | | | | |
| | II–2–5 | | | | | | | |
| | A0–5 | | 0.5 | | 0.5 | | | |
| Discoloration after 30 min. | | deep brown | yellow brown | deep brown | yellow brown | deep brown | yellow brown | yellow brown |
| after 60 min. | | black brown | brown | black brown | brown | black brown | deep brown | brown |
| Oxygen absorption induction period (min.) | | 135 | 140 | 135 | 140 | 140 | 165 | 145 |
| Δ YI | | 14.0 | 14.2 | 14.1 | 14.3 | 13.9 | 13.7 | 14.5 |
| Charpy impact value (Kg f. cm /cm) | | 11.7 | 11.9 | 11.7 | 11.9 | 11.5 | 12.7 | 11.7 |

TABLE 4 (6)

| Test Compound | | Comparison 32 | 33 | 34 | 35 | 36 | 37 | 38 |
|---|---|---|---|---|---|---|---|---|
| Phenolic | I–1 | | | | | | | |
| | I–2 | | | | | | | |
| | I–3 | | | | | | | |
| | I–4 | | | | | | | |
| | A0–2 | 0.5 | 0.5 | 0.5 | 0.5 | 0.5 | 0.5 | |
| | A0–7 | | | | | | | 1.0 |
| Sulfur-containing | II–1–2 | 1.0 | | | | | | |
| | II–2–4 | | 0.5 | | | | | |
| | II–2–5 | | | 0.5 | 1.0 | | | |
| | A0–5 | | | | | 0.5 | 1.0 | |
| Discoloration after 30 min. | | yellow brown | yellow brown | yellow brown | yellow brown | yellow brown | yellow brown | yellow brown |
| after 60 min. | | brown | brown | brown | brown | brown | brown | brown |
| Oxygen absorption induction period (min.) | | 155 | 145 | 145 | 155 | 145 | 155 | 145 |
| Δ YI | | 14.7 | 14.3 | 14.5 | 14.8 | 14.6 | 14.9 | 13.2 |
| Charpy impact value (Kg f.cm /cm) | | 12.9 | 11.6 | 11.6 | 13.0 | 11.4 | 13.5 | 12.8 |

TABLE 4 (7)

| Test Compound | | Comparison 39 | 40 | 41 | 42 | 43 | | |
|---|---|---|---|---|---|---|---|---|
| Phenolic | I–1 | | | | | non - addition | | |
| | I–2 | | | | | | | |
| | I–3 | | | | | | | |
| | I–4 | | | | | | | |
| | A0–2 | | | | | | | |
| | A0–7 | 0.5 | 0.5 | 0.5 | 0.5 | | | |
| Sulfur-containing | II–1–2 | 0.5 | | | | | | |
| | II–2–4 | | 0.5 | | | | | |
| | II–2–5 | | | 0.5 | | | | |
| | A0–5 | | | | 0.5 | | | |
| Discoloration after 30 min. | | deep brown | deep brown | deep brown | deep brown | deep brown | | |
| after 60 min. | | black brown | black brown | black brown | black brown | black brown | | |
| Oxygen absorption induction period (min.) | | 150 | 150 | 150 | 140 | 10 | | |
| Δ YI | | 14.5 | 14.6 | 14.8 | 15.0 | 15.9 | | |
| Charpy impact value (Kg f. cm /cm) | | 12.4 | 12.5 | 12.4 | 11.7 | 7.2 | | |

Example 3

To a 25% urethane dope (prepared from 25 parts of urethane resin, 3.75 parts of dimethylformamide and 71.25 parts of tetrahydrofuran), each of the test compounds shown in Table 5 was added in an amount by weight parts shown in Table 5 for 100 weight parts of the above-mentioned polyurethane. Thereafter, the resulting dope was coated in 1.2 mm thickness on a polyester film, and was dried at 45°C. for one hour in a drier. The sheet thus obtained was punched out into test pieces by a No. 3 Dumbbell.

After irradiation with light for 60 hours and 120 hours in a Fade-O-Meter (light source: UV carbon arc; black panel temperature: 63 ± 3°C.), the test pieces were subjected to a tensile test (tensile speed: 200 mm/min; measurement temperature: 25°C.) to obtain the retention ratio of break strength. The results are shown in Table 5, in which AO—1, AO—2 and AO—5 are as in Tables 3 and 4.

TABLE 5 (1)

| Test Compound | Run | | | | | | | | | | |
|---|---|---|---|---|---|---|---|---|---|---|---|
| | 1 | 2 | 3 | 4 | 5 | 6 | 7 | 8 | 9 | 10 | 11 |
| I–1 | 0.5 | 0.5 | 0.5 | 0.5 | 0.5 | 0.5 | | | | | |
| I–2 | | | | | | | 0.5 | 0.5 | 0.5 | 0.5 | 0.5 |
| I–3 | | | | | | | | | | | |
| I–4 | | | | | | | | | | | |
| A0–1 | | | | | | | | | | | |
| A0–2 | | | | | | | | | | | |
| II–1–2 | 0.5 | 1.0 | | | | | 0.5 | 1.0 | | | |
| II–2–4 | | | 0.5 | 1.0 | | | | | 0.5 | 1.0 | |
| II–2–5 | | | | | 0.5 | 1.0 | | | | | 0.5 |
| A0–5 | | | | | | | | | | | |
| Break strength retention (%) | | | | | | | | | | | |
| 60 hours | 57 | 61 | 55 | 57 | 56 | 59 | 55 | 58 | 55 | 57 | 56 |
| 120 hours | 40 | 43 | 37 | 40 | 39 | 42 | 36 | 39 | 35 | 38 | 36 |

TABLE 5 (2)

| Test Compound | Run | | | | | | | Comparison | | | |
|---|---|---|---|---|---|---|---|---|---|---|---|
| | 12 | 13 | 14 | 15 | 16 | 17 | 18 | 19 | 20 | 21 | 22 |
| I–1 | | | | | | | | 0.5 | 1.0 | 0.5 | 0.5 |
| I–2 | 0.5 | | | | | | | | | | |
| I–3 | | 0.5 | 0.5 | 0.5 | | | | | | | |
| I–4 | | | | | 0.5 | 0.5 | 0.5 | | | | |
| A0–1 | | | | | | | | | | | |
| A0–2 | | | | | | | | | | | |
| II–1–2 | | 0.5 | | | 0.5 | | | | | | |
| II–2–4 | | | 0.5 | | | 0.5 | | | | | |
| II–2–5 | 1.0 | | | 0.5 | | | 0.5 | | | | |
| A0–5 | | | | | | | | | | 0.5 | 1.0 |
| Break strength retention (%) | | | | | | | | | | | |
| 60 hours | 58 | 56 | 55 | 56 | 55 | 56 | 55 | 35 | 38 | 36 | 37 |
| 120 hours | 39 | 37 | 35 | 36 | 35 | 37 | 36 | 20 | 23 | 22 | 23 |

TABLE 5 (3)

| Test Compound | Comparison | | | | | | | | | | |
|---|---|---|---|---|---|---|---|---|---|---|---|
| | 23 | 24 | 25 | 26 | 27 | 28 | 29 | 30 | 31 | 32 | 33 |
| I–1 | | | | | | | | | | | |
| I–2 | 0.5 | 0.5 | | | | | | | | | |
| I–3 | | | 0.5 | 0.5 | | | | | | | |
| I–4 | | | | | 0.5 | 0.5 | | | | | |
| A0–1 | | | | | | | 0.5 | 0.5 | 0.5 | 0.5 | 0.5 |
| A0–2 | | | | | | | | | | | |
| II–1–2 | | | | | | | | 0.5 | | | |
| II–2–4 | | | | | | | | | 0.5 | | |
| II–2–5 | | | | | | | | | | 0.5 | |
| A0–5 | | 0.5 | | 0.5 | | 0.5 | | | | | 0.5 |
| Break strength retention (%) | | | | | | | | | | | |
| 60 hours | 33 | 34 | 34 | 35 | 35 | 36 | 31 | 32 | 32 | 32 | 32 |
| 120 hours | 18 | 20 | 19 | 21 | 20 | 22 | 17 | 18 | 17 | 18 | 18 |

TABLE 5 (4)

| Test Compound | Comparison | | | | | | | | |
|---|---|---|---|---|---|---|---|---|---|
| | 34 | 35 | 36 | 37 | 38 | 39 | 40 | 41 | 42 |
| I–1 | | | | | | | | | non - addition |
| I–2 | | | | | | | | | |
| I–3 | | | | | | | | | |
| I–4 | | | | | | | | | |
| A0–1 | | | | | | | | | |
| A0–2 | 0.5 | 1.0 | 0.5 | 0.5 | 0.5 | 0.5 | 0.5 | 0.5 | |
| II–1–2 | | | 0.5 | 1.0 | | | | | |
| II–2–4 | | | | | 0.5 | | | | |
| II–2–5 | | | | | | 0.5 | 1.0 | | |
| A0–5 | | | | | | | | 0.5 | |
| Break strength retention (%) | | | | | | | | | |
| 60 hours | 35 | 38 | 36 | 37 | 36 | 36 | 37 | 36 | 30 |
| 120 hours | 20 | 22 | 21 | 21 | 20 | 21 | 22 | 20 | 16 |

**Claims**

1. A stabilizer for synthetic resins characterised in that its effective ingredient comprises a mixture of (I) at least one phenolic compound represented by the general formula (I):

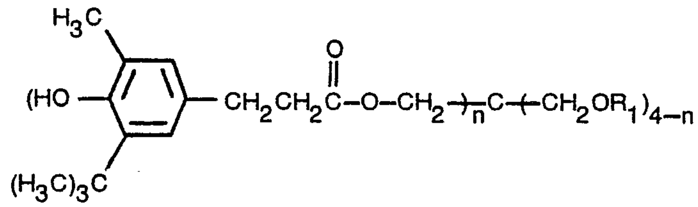

(I)

wherein $R_1$ is hydrogen, an alkyl group having 1 to 4 carbon atoms or an acyl group having 1 to 5 carbon atoms, and n is an integer from 1 to 4, and (II) at least one sulfur-containing compound selected from compounds represented by the general formulae (II—1) and (II—2):

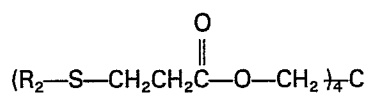

(II—1)

wherein $R_2$ is an alkyl group having 4 to 20 carbon atoms, and

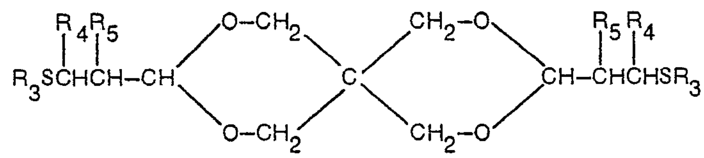

(II–2)

wherein $R_3$ is an alkyl group having 3 to 18 carbon atoms and $R_4$ and $R_5$ are selected indpendently from hydrogen and alkyl groups of 1 to 6 carbon atoms.

2. A stabilizer according to claim 1 characterised in that the weight ratio (I):(II) is 1: 0.5—15.

3. A stabilizer according to claim 1 characterised in that component (I) is selected from tetrakis[3 - (3 - methyl - 5 - t - butyl - 4 - hydroxyphenyl)propionyloxymethyl]methane, 2,2,2 - tris[3-(3 - methyl - 5 - t - butyl - 4 - hydroxyphenyl)propionyloxymethyl]ethanol, 2,2,2 - tris[3 - (3 - methyl - 5 - t - butyl - 4 - hydroxyphenyl)propionyloxymethyl)ethyl acetate, and 2,2,2 - tris[3 - (3 - methyl - 5 - t - butyl - 4 - hydroxyphenyl)propionyloxymetyl] - 1 - methoxyethane.

4. A stabilizer according to claim 1 or 2 or 3 characterised in that component (II) comprises tetrakis - (3 - dodecylthiopropionyloxymethyl)methane and/or 3,9 - bis(2 - dodecylthioethyl) - 2,4,8,10 - tetraoxaspiro(5,5)undecane.

5. Synthetic resin incorporating a stabilizer according to any of claims 1 to 4, the resin preferably being polyolefin, e.g. polypropylene.

6. A phenolic compound characterised by the general formula:

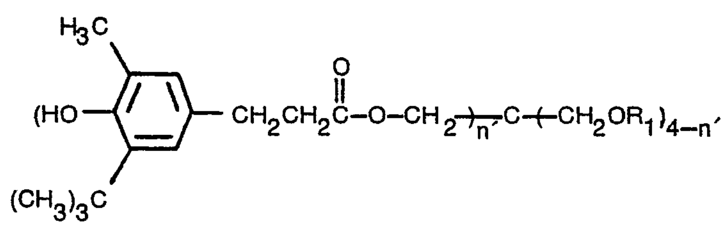

wherein n′ is an integer from 1 to 3, and $R_1$ stands for a hydrogen atom or an alkyl group having 1 to 4 carbon atoms or an acyl group having 1 to 5 carbon atoms.

7. A compound according to claim 6 which is 2,2,2 - tris[3 - (3 - methyl - 5 - t - butyl - 4 - hydroxyphenyl)propionyloxymethyl]ethanol, 2,2,2 - tris[3 - (3 - methyl - 5 - t - butyl - 4 - hydroxyphenyl)propionyloxymethyl]ethyl acetate, 2,2,2 - tris[3 - (3 - methyl - 5 - t - butyl - 4 - hydroxyphenyl)-propionyloxymethyl] - 1 - methoxyethane.

8. A method of producing a phenolic compound according to claim 6 characterised by reacting 3 - (3 - methyl - 5 - t - butyl - 4 - hydroxyphenyl)propionic acid represented by the general formula

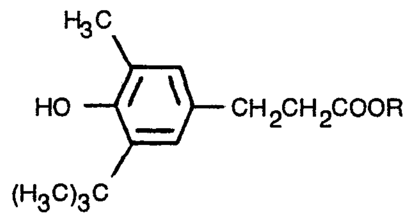

with a pentaerythritol represented by the general formula:

$$(HOCH_2)_{n'}C(CH_2OR_1)_{4-n'}$$

wherein n′ is an integer of 1 to 3, R is a hydrogen atom or an alkyl group having 1 to 4 carbon atoms, and $R_1$ is as defined in claim 6.

9. A method according to claim 8 characterised in that the molar ratio of the pentaerythritol to the 3-(3-methyl-5-t-butyl-4-hydroxyphenyl)propionic acid is 1:0.5—4.

10. A method according to claim 8 or 9 characterised in that the reaction is carried out in the presence of an acidic or basic catalyst, preferably potassium t-butoxide, sodium methoxide, sodim phenoxide or sodium hydroxide.

**Patentansprüche:**

1. Stabilisierungsmittel für synthetische Harze, dadurch gekennzeichnet, daß sein wirksamer Bestandteil aus einer Mischung aus (I) wengistens einer phenolischen Verbindung der allgemeinen Formel (I)

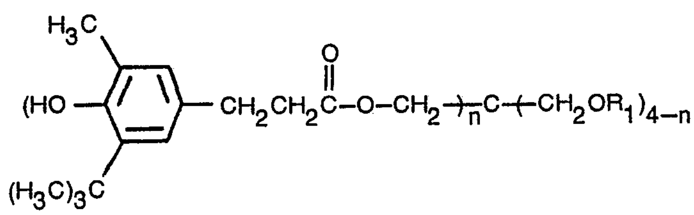

(I)

worin $R_1$ Wasserstoff, eine Alkylgruppe mit 1 bis 4 Kohlenstoffatomen oder eine Acylgruppe mit 1 bis 5 Kohlenstoffatomen ist und n eine ganze Zahl von 1 bis 4 ist, und (II) wenigstens einer Schwefel enthaltenden Verbindung, ausgewählt aus Verbindungen der allgemeinen Formeln (II—1) und (II—2)

$$(R_2{-}S{-}CH_2CH_2\overset{O}{\overset{\|}{C}}{-}O{-}CH_2)_4C \qquad (II-1)$$

worin $R_2$ eine Alkylgruppe mit 4 bis 20 Kohlenstoffatomen ist, und

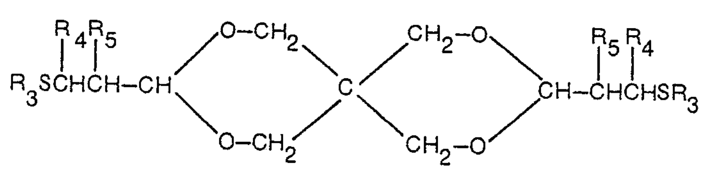

(II-2)

worin $R_3$ eine Alkylgruppe mit 3 bis 18 Kohlenstoffstomen ist und $R_4$ und $R_5$ unabhängig voneinander aus Wasserstoff und Alkylgruppen mit 1 bis 6 Kohlenstoffatomen ausgewählt sind, besteht.

2. Stabilisierungsmittel nach Anspruch 1, dadurch gekennzeichnet, daß das Gewichtsverhältnis von (I): (II) 1: 0,5—15 beträgt.

3. Stabilisierungsmittel nach Anspruch 1, dadurch gekennzeichnet, daß die Komponente (I) ausgewält ist aus Tetrakis[3 - (3 - methyl - 5 - tert. - butyl - 4 - hydroxyphenyl)propionyloxymethyl]methan, 2,2,2 - Tris[3 - (3 - methyl - 5 - tert. - buty7l - 4 - hydroxyphenyl)propionyloxymethyl]ethanol, 2,2,2 - Tris[3 - (3 - methyl - 5 - tert. - butyl - 4 - hydroxyphenyl)propionyloxymethyl]ethylacetat und 2,2,2 - Tris[3 - (3 - methyl - 5 - tert. - butyl - 4 - hydroxyphenyl)propionyloxymethyl] - 1 - methoxyethan.

4. Stabilisierungsmittel nach Anspruch 1 oder 2 oder 3, dadurch gekennzeichnet, daß die Komponente (II) aus Tetrakis(3 - dodecylthiopropionyloxymethyl)methan und/oder 3,9 - Bis(2 - dodecylthioethyl) - 2,4,8,10 - tetraoxaspiro(5,5) undecan besteht.

5. Synthetisches Harz, das ein Stabilisierungsmittel gemäß einem der Ansprüche 1 bis 4 enthält, wobei das Harz vorzugsweise ein Polyolefin, beispielsweise Polypropylen, ist.

6. Phenolische Verbindung, gekennzeichnet durch die allgemeine Formel

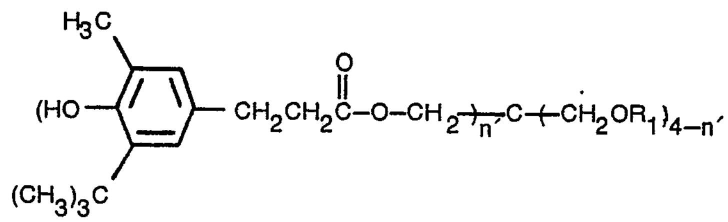

worin n' eine ganze Zahl von 1 bis 3 ist und $R_1$ für ein Wasserstoffatom oder eine Alkylgruppe mit 1 bis 4 Kohlenstoffatomen oder eine Acylgruppe mit 1 bis 5 Kohlenstoffatomen steht.

7. Verbindung nach Anspruch 6, dadurch gekennzeichnet, daß sie aus 2,2,2 - Tris[3 - (3 - (3 - methyl - 5 - tert. - butyl - 4 - hydroxyphenyl)propionyloxymethyl]ethanol, 2,2,2 - Tris[3 - (3 - methyl - 5 - tert. - butyl - 4 - hydroxyphenyl)propionyloxymethyl]ethylacetat oder 2,2,2 - Tris[3 - methyl - 5 - tert. - butyl - 4 - hydroxyphenyl)propionyloxymethyl] - 1 - methoxyethan besteht.

8. Verfahren zur Herstellung einer phenolischen Verbindung gemäß Anspruch 6, dadurch gekennzeichnet, daß 3 - (3 - Methyl - 5 - tert. - butyl - 4 - hydroxyphenyl)proponsäure der allgemeinen Formel

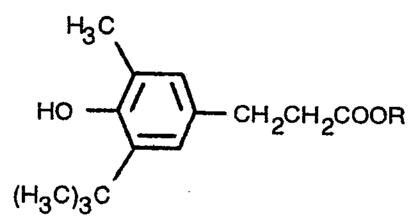

(III)

mit einem Pentaerythrit der allgemeinen Formel

$$(HOCH_2)_{n'}C(CH_2OR_1)_{4-n'}$$

worin n' ein ganze Zahl von 1 bis 3 ist, R ein Wasserstoffatom oder eine Alkylgruppe mit 1 bis 4 Kohlenstoffatomen bedeutet und $R_1$ die Definition von Anspruch 6 besitzt, umgesetzt wird.

9. Verfahren nach Anspruch 8, dadurch gekennzeichnet, daß das Molverhältnis des Pentaerythrits zu der 3 - (3 - Methyl - 5 - tert. - butyl - 4 - hydroxyphenyl)propionsäure 1:0,5—4 beträgt.

10. Verfahren nach Anspruch 8 oder 9, dadurch gekennzeichnet, daß die Reaktion in Gegenwart eines sauren oder basischen Katalysators, vorsugsweise Kalium-tert.-butoxid, Natriummethoxid, Natriumphenoxid oder Natriumhydroxid, durchgeführt wird.

**Revendications:**

1. Agent stabilisant pour résines synthétiques, caractérisé en ce que son ingrédient efficace comprend un mélange de (I) au moins un composé phénolique représenté par la formule générale (I):

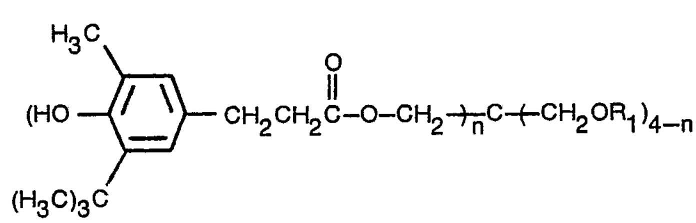

(I)

dans laquelle $R_1$ est l'hydrogène, un groupe alkyle ayant 1 à 4 atomes de carbone ou un groupe acyle ayant 1 à 5 atomes de carbone et n est un nombre entier de 1 à 4, et (II) au moins un composé contenant du soufre choisi entre des composés représentés par les formules générales (II—1) et II—2):

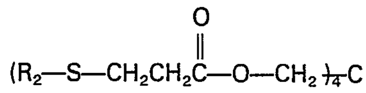

(II—1)

où $R_2$ est un groupe alkyle ayant 4 à 20 atomes de carbone, et

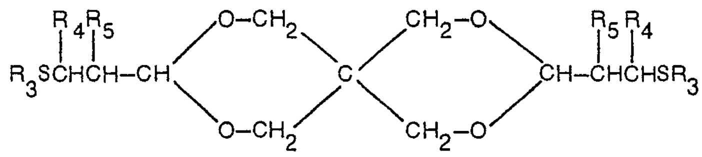

(II-2)

où $R_3$ est un groupe alkyle ayant 3 à 18 atomes de carbone, et $R_4$ et $R_5$ sont choisis indépendamment entre l'hydrogène et des groupes alkyle ayant 1 à 6 atomes de carbone.

2. Stabilisant suivant la revendication 1, caractérisé en ce que le rapport en poids (I) : (II) a une valeur de 1:0,5—15.

3. Stabilisant suivant la revendication 1, caractérisé en ce que le composant (I) est choisi entre le tétrakis[3 - (3 - méthyl - 5 - tertio - butyl - 4 - hydroxyphényl)propionyloxyméthyl]méthane, le 2,2,2 - tris - [3 - (3 - méthyl - 5 - tertio - butyl - 4 - hydroxyphényl)propionyloxyméthyl]éthanol, l'acétate de 2,2,2 - tris[3 - (3 - méthyl - 5 - tertio - butyl - 4 - hydroxyphényl)propionyloxyméthyl]éthyle et le 2,2,2 - tris[3 - (3 - méthyl - 5 - tertio - butyl - 4 - hydroxyphényl)propionyloxyméthyl] - 1 - méthoxyéthane.

4. Stabilisant suivant la revendication 1 ou 2 ou 3, caractérisé en ce que la composant (II) comprend le tétrakis - (3 - dodécylthiopropionyloxyméthyl)méthane et/ou le 3,9 - bis(2 - dodécylthioéthyl) - 2,4,8,10 - tétra - oxaspiro[5,5]undécane.

5. Résine synthétique renfermant un stabilisant suivant l'une quelconque des revendications 1 à 4, la résine étant de préférence une polyoléfine, par exemple un polypropylène.

6. Composé phénolique, caractérisé par la formule générale:

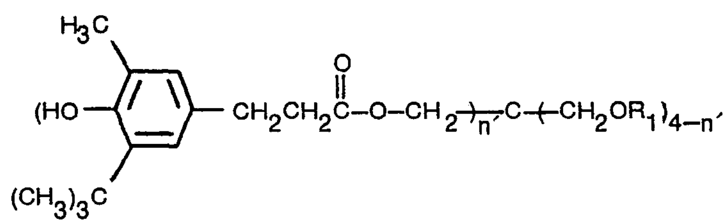

dans laquelle n' est un nombre entire de 1 à 3 et $R_1$ représente un atome d'hydrogène ou un groupe alkyle ayant 1 à 4 atomes de carbone ou un groupe acyle ayant 1 à 5 atomes de carbone.

7. Composé suivant la revendication 6, qui est le 2,2,2 - tris[3 - (3 - méthyl - 5 - tertio - butyl - 4 - hydroxyphényl)propionyloxyméthyl]éthanol, l'acétate de 2,2,2 - tris[3 - (3 - méthyl - 5 - tertio - butyl - 4 - hydroxyphényl) - propionyloxyéthyl]éthyl, le 2,2,2 - tris[3 - (3 - méthyl - 5 - tertio - butyl - 4 - hydroxyphényl)propionyloxyméthyl] - 1 - méthoxyéthane.

8. Procédé de production d'un composé phénolique suivant la revendication 6, caractérisé en ce qu'on fait réagir l'acide 3 - (3 - méthyl - 5 - tertio - butyl - 4 - hydroxyphényl)propionique représenté par la formule générale:

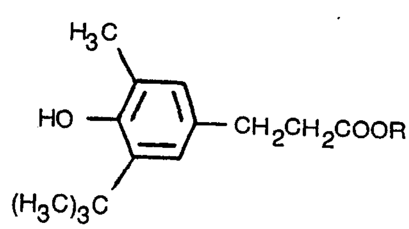

(III)

avec un pentaérythritol représenté par la formule générale:

$$(HOCH_2)_{n'}C(CH_2OR_1)_{4-n'}$$

dans laquelle n' est un nombre entier de 1 à 3, R est un atome d'hydrogène ou un groupe alkyle ayant 1 à 4 atomes de carbone et $R_1$ a la définition donné dans la revendication 6.

9. Procédé suivant la revendication 8, caractérisé en ce que le rapport molaire du pentaérythritol à l'acide 3-(3-méthyl-5-tertio-butyl-4-hydroxyphényl)propionique an une valeur 1:0,5—4.

10. Procédé suivant la revendication 8 ou 9, caractérisé en ce qu'on conduit la réaction en présence d'un catalyseur acide ou basique, de préférence le tertio-butylate de potassium, le méthylate de sodium, le phénate de sodium ou l'hydroxyde de sodium.